# EUROPÄISCHE PATENTSCHRIFT

(11) **EP 0 710 393 B1**
(45) Veröffentlichungstag und Bekanntmachung des Hinweises auf die Patenterteilung: **06.08.1997**
(21) Anmeldenummer: 94918750.4
(22) Anmeldetag: 27.06.1994
(51) Int. Cl.: G11B 17/22

(54) **PLATTENABSPIELGERÄT**
RECORD PLAYER
TOURNE-DISQUE

(30) Priorität: 23.07.1993 DE 4324804
(43) Veröffentlichungstag der Anmeldung: 08.05.1996
(73) Patentinhaber: NSM AKTIENGESELLSCHAFT, 55411 Bingen (DE)
(72) Erfinder: MENKE, Wilhelm, D-55411 Bingen (DE); HEIDERSBERGER, Börge, D-55411 Bingen (DE)
(74) Vertreter: Becker, Bernd, Dipl.-Ing.
(86) Internationale Anmeldenummer: DE9400746
(87) Internationale Veröffentlichungsnummer: WO9503608

(56) Entgegenhaltungen:
- EP-A- 0 138 005
- WO-A-90/04845
- US-A- 4 768 116
- US-A- 4 901 172
- PATENT ABSTRACTS OF JAPAN vol. 11, no. 342 (P-635) (2789) 10. November 1987 & JP,A,62 124 662 (HITACHI LTD) 5. Juni 1987

## Beschreibung

Die Erfindung bezieht sich auf ein Plattenabspielgerät mit mindestens einem Plattenmagazin, das eine Vielzahl übereinanderliegend in Aufnahmefächern abgelegter Platten aufweist, und mit einer in Stapelrichtung des Plattenmagazins verfahrbaren Transporteinrichtung zum Austausch einer gewünschten Platte zwischen dem Aufnahmefach und einer Abspieleinheit, wobei jede Platte drehbeweglich in einer Kassette mit mindestens einem dem Abspielkopf der Abspieleinheit zugeordneten, durch ein Verschiebeelement verschließbaren Fenster untergebracht ist.

Derartige Plattenabspielgeräte sind in den verschiedensten Ausführungsformen bekannt. So zeigt beispielsweise die EP 0 439 483 B1 ein Plattenabspielgerät mit zwei einander gegenüberliegenden Plattenmagazinen, die eine Vielzahl übereinanderliegend in Aufnahmefächern gelagerter, jeweils eine Platte aufnehmender Plattenhalter aufweisen, und mit einer in Stapelrichtung der Plattenmagazine bewegbaren Transporteinrichtung zur Hin- und Her-Beförderung einer Platte mit dem zugehörigen Plattenhalter zwischen den Plattenmagazinen und einer Abspieleinheit. Die Platten werden also zunächst in die Plattenhalter eingelegt und anschließend werden die jeweils mit einer Platte bestückten Plattenhalter in die Aufnahmefächer der Plattenmagazine eingeschoben. In der Regel handelt es sich hierbei um sogenannte CD-Platten (Compact-Disc-Platten), die eine lange Spielzeit und dennoch einen geringen Durchmesser von bis zu 8cm haben, wodurch es möglich ist, eine Abspieleinheit und Plattenmagazine einer gedrängten Konstruktion zu benutzen, so daß das Plattenabspielgerät insgesamt eine verhältnismäßig kleine Baugröße aufweist.

Weiterhin ist zwischenzeitlich ein Plattenabspielgerät zum Abspielen einer in einer flachen, zum Schutz dienenden Kassette aufgenommenen Platte bekanntgeworden, der die Platte abspielt, während sie in der Kassette gehalten ist. Die Kassette ist einerseits mit einer Zugriffsöffnung versehen, durch die die Platte von der Abspieleinheit erfaßt und gedreht wird, und andererseits mit einem Fenster, durch das die Platte von dem Abspielkopf der Abspieleinheit abgetastet werden kann, während sie sich in der Kassette dreht. Das Fenster ist im nicht benutzten Zustand der Kassette durch ein in die Kassette integriertes Schiebeelement verschlossen und wird beim Einlegen der Kassette in das Plattenabspielgerät durch einen geeigneten Mechanismus geöffnet und nach dem Abspielen der Platte beim Herausnehmen der Kassette wieder verschlossen. Bei den in den Schutzkassetten untergebrachten Platten handelt es sich in der Regel um sogenannte Mini-Compact-Discs, die eine äußerst lange Spielzeit und dennoch einen geringen Durchmesser von bis zu 6cm haben. In den bisher bekannten Plattenabspielgeräten mit eine große Anzahl von Platten aufnehmenden Plattenmagazinen lassen sich derartige in Schutzkassetten aufgenommene Platten nicht abspielen, insbesondere deshalb nicht, weil sie keinen der Abspieleinheit vorgeschalteten, aufwendigen Mechanismus für die Betätigung des Schiebeelementes der Kassette besitzen.

Ferner ist aus der US-A-4768 116, die dem nächstliegenden Stand der Technik enthält, ein Plattenabspielgerät mit einem Plattenmagazin mit einer Vielzahl von Aufnahmefächern für Platten und mit einer in der Stapelrichtung der Platten verfahrbaren Transporteinrichtung bekannt, um Platten zwischen den Aufnahmefächern und einer Abspieleinheit auszutauschen, wobei jede Platte in einer Kassette mit mit einem Schiebeelement verschließbaren Fenster untergebracht ist.

Der Erfindung liegt die Aufgabe zugrunde, ein Plattenabspielgerät der eingangs genannten Art zu schaffen, mit dem ohne großen konstruktiven Aufwand in flachen Schutzkassetten aufgenommene Platten abgespielt werden können.

Diese Aufgabe wird erfindungsgemäß dadurch gelöst, daß
- jede Kassette in einen Kassettenhalter eingeschoben ist, der im Aufnahmefach des Plattenmagazins gelagert und von der Transporteinrichtung ergreifbar ist, und
- jeder Kassettenhalter zum einen mit einer Nase, die beim Einschieben der Kassette in den Kassettenhalter das Schiebeelement in die Auf-Stellung überführt, und zum anderen mit einem elastischen Vorsprung, der beim Herausziehen der Kassette aus dem Kassettenhalter das Schiebeelement in die Zu-Stellung überführt, versehen ist.

Durch diese Maßnahmen ergibt sich ein konstruktiv einfaches und kompaktes Plattenabspielgerät, das das Abspielen von in speziellen Kassetten untergebrachten Platten ermöglicht. Der Kassettenhalter gewährleistet zum einen eine engen Stapel abstand der Kassettenhalter zueinander und zum anderen ein zuverlässiges Öffnen und Schließen des Schiebeelementes. In der Gebrauchsstellung der Kassette, d.h. im eingeschobenen Zustand der Kassette in den Kassettenhalter, ist das Fenster der Kassette stets geöffnet, wodurch die Platte abspielbereit zur Verfühgung steht, während im Nicht-Gebrauchszustand der Kassette, d.h. bei aus dem Kassettenhalter herausgenommener Kassette, das Fenster der Kassette geschlossen ist, wodurch die Platte gegen Schmutzeinwirkungen vollständig geschützt ist.

Bei einer vorteilhaften Ausgestaltung der Erfindung ist das Schiebeelement der Kassette in der Zu-Stellung durch eine federbelastete Verriegelungseinrichtung festgelegt, und die Nase des Kassettenhalters löst beim Einschieben der Kassette in den Kassettenhalter zuerst die Verriegelungseinrichtung. Auf diese Weise wird ein in der Zu-Stellung verriegeltes Schiebeelement der Kassette beim Einschieben derselben in den Kassettenhalter zuverlässig zunächst aus seiner Verriegelungsstellung befreit.

Um ein sicheres Halten der Kassette in dem Kassettenhalter zu gewährleisten, weist nach einer vorteilhaften Weiterbildung der Erfindung der einen Rahmen umfassende Kassettenhalter in Einschubeinrichtung der Kassette im hinteren Bereich mindestens zwei gegenüberliegende Haltestege auf, die in entsprechende seitliche Schlitze der Kassette eingreifen.

Weiterhin ist bevorzugt vorgesehen, daß die Nase an der Innenseite der dem Fenster der Kassette zugewandten Seitenwand des Rahmens angeformt ist und beim Einschieben der Kassette in den Kassettenhalter in den entsprechenden seitlichen Schlitz der Kassette eingreift, einen in diesen Schlitz vorstehenden federbelasteten Hebel der Verriegelungseinrichtung niederdrückt und an einer den Schlitz abdeckenden Abwinklung des sich in der Zu-Stellung befindlichen Schiebeelementes zur Anlage kommt. So ergibt sich stets ein problemloses Öffnen des Fensters der Kassette.

Zur Realisierung eines zuverlässigen Schließvorganges des Fensters der Kassette greift nach einer weiteren vorteilhaften Ausgestaltung der Erfindung der an der Innenseite der dem Fenster der Kassette zugewandten Seitenwand des Rahmens angeordnete, elastische Vorsprung im eingeschobenen Zustand der Kassette in den Kassettenhalter in eine zugehörige Öffnung der Abwinkelung des Schiebeelementes ein. Beim Herausschieben der Kassette aus dem Kassettenhalter nimmt der Vorsprung das Schiebeelement solange mit, bis das Schiebeelement seine Schließstellung eingenommen hat und anschließend bewegt sich der Vorsprung aus der Öffnung des Schiebeelementes heraus. Zweckmäßigerweise ist der Vorsprung an einer aus der Seitenwand des Rahmens ausgeklinkten, federnden Zunge angeformt. Dies ist fertigungstechnisch leicht durchzuführen. Bei einer alternativen Ausführung ist der Vorsprung als federbelastetes, in die Seitenwand des Rahmens eingesetzter Raststift ausgebildet.

Damit beim Abspielen einer Platte ein auf der zugehörigen Kassette angebrachtes Informations-Bild in korrekter, bzw. lesbarer Ausrichtung betrachtet werden kann, ist nach einer vorteilhaften Weiterbildung des Erfindungsgegenstandes der Rahmen des Kassettenhalters mit einer Deckenwand versehen, in die eine Aussparung entsprechend der Größe eines auf der Oberseite der Kassette angebrachten Informations-Bildes eingelassen ist, das beim Abspielen der in der Kassette befindlichen Platte in der richtigen Lage zu betrachten ist.

Zur sicheren Lagerung und Verschiebung des Kassettenhalters weist bevorzugt der Rahmen des Kassettenhalters außenseitig quer zur Einschubrichtung der Kassette zwei gegenüberliegende Gleitschienen zur Auflage im Aufnahmefach des Plattenmagazins und im Tragarm der Transporteinrichtung auf.

Damit der Kassettenhalter bei zwei einander gegenüberliegenden Plattenmagazinen auf einfache Weise von der Transporteinrichtung erfaßt werden kann, schließt sich zweckmäßigerweise an diein Einschubrichtung der Kassette in den Kassettenhalter vordere Gleitschiene des Rahmens endseitig jeweils eine Greiftasche für einen Greifarm der Transporteinrichtung an. Zweckmäßigerweise übergreift die vordere Gleitschiene im eingeschobenen Zustand der Kassette in dem Kassettenhalter die der Gleitschiene zugewandte Außenwand der Kassette in einer bestimmten Höhe. Hierdurch wird ein Zurückgleiten der Kassette aus dem Kassettenhalter verkleinert, wobei die vordere Gleitschiene als Rastung der Kassette dient.

Um eine exakte Positionierung des Kassettenhalters im Plattenmagazin und in der Transporteinrichtung zu erreichen, ist bei einer Weiterbildung der Erfindung in die in Einschubrichtung der Kassette in dem Kassettenhalter hintere Gleitschiene des Rahmens mittig eine Rastmulde eingelassen, in die eine Rastfeder des Plattenmagazins oder einer Rastfeder des Tragarmes der Transporteinrichtung eingreift.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrundeliegende Gedanke wird in der nachfolgenden Beschreibung anhand eines Ausführungsbeispieles, das in der Zeichnung dargestellt ist, näher erläutert. Es zeigt:

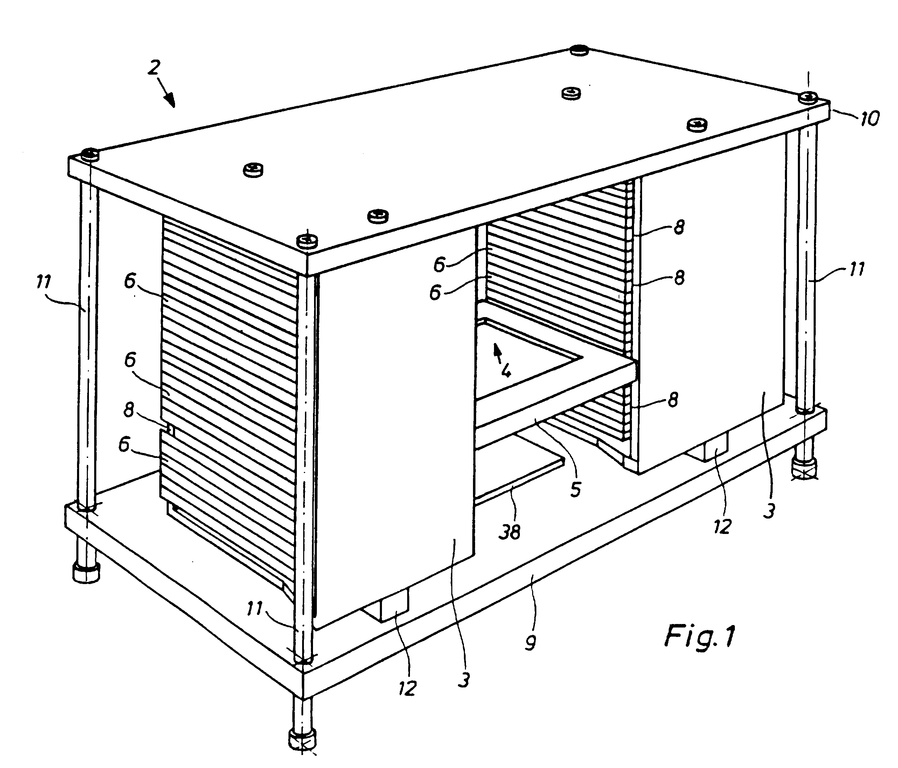

- Fig. 1: eine perspektivische Ansicht eines Plattenabspielgerätes nach der Erfindung,

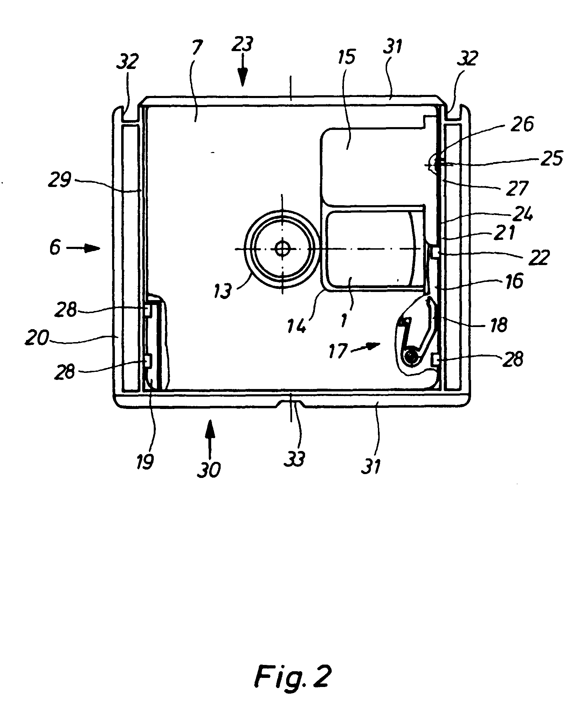

- Fig. 2: eine Unteransicht eines in einem Plattenmagazin des Plattenabspielgerätes nach Fig. 1 abgelegten Kassettenhalters mit eingesetzter Kassette im vergrößerten Maßstab und teilweise im Schnitt,

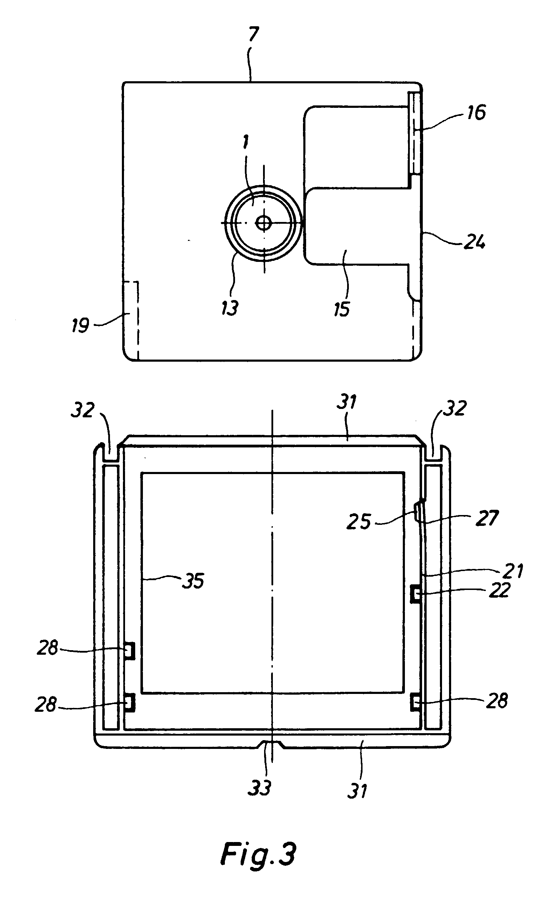

- Fig. 3: eine Einzeldarstellung der Kassette und des Kassettenhalters nach Fig. 2 und

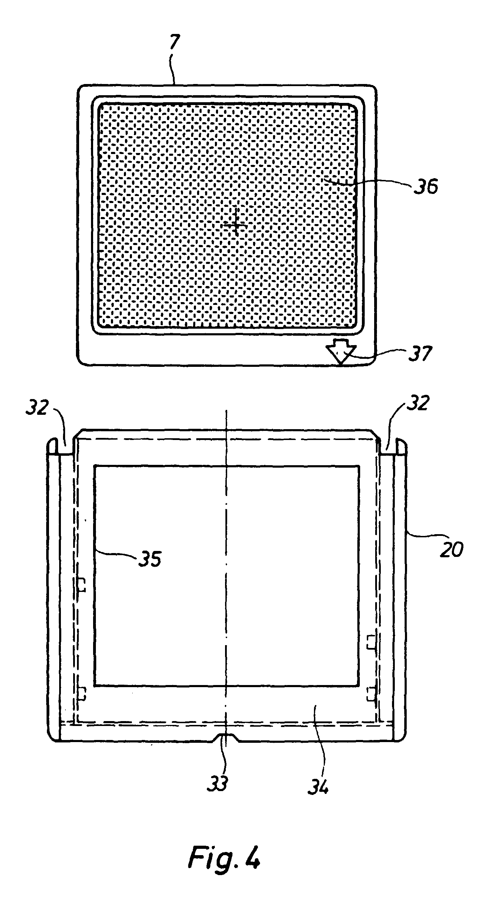

- Fig. 4: eine Einzeldarstellung der Kassette und des Kassettenhalters in Draufsicht.

Das mit einer nicht dargestellten zentralen Steuereinheit ausgerüstete Plattenabspielgerät, durch das auf den Platten 1 gespeicherte Informationen ausgelesen und wiedergegeben werden können, besitzt ein Gehäuse 2 mit einer zugeordneten, nicht dargestellten Bedienungstafel, die verschiedene Tasten aufweist, beispielsweise eine Plattenauswahltaste, eine Plattenabspieltaste und eine Stopptaste. Seitlich im Gehäuse 2 sind gegenüberstehend Plattenmagazine 3 angeordnet. In dem Raum zwischen den Plattenmagazinen 3 befindet sich eine auf- und abverfahrbare Transporteinrichtung 4 mit einem Tragarm 5 für einen Kassettenhalter 6, in den eine eine Platte 1 drehbar aufnehmende Kassette 7 eingesetzt ist. Eine Abspieleinheit 38 mit im einzelnen nicht dargestelltem Plattenteller, Motor zu Drehung des Plattentellers und Abspielkopf ist feststehend zwischen und unterhalb der beiden gegenüberliegenden Plattenmagazine 3 angebracht.

Die Plattenmagazine 3 sind untereinander identisch aufgebaut und besitzen jeweils eine Vielzahl übereinanderliegend angeordneter Aufnahmefächer 8 für die Lagerung einer entsprechenden Anzahl an je eine Kassette 7 mit innenliegender Platte 1 aufnehmender Kassettenhalter 6. In dem Aufnahmefach 8 ist der Kassettenhalter 6 durch mindestens eine am Plattenmagazin 3 angebrachte Rastfeder in seiner Lage gesichert. In dieser Lage steht der Kassettenhalter 6 soweit über den beiden möglichen Auszugseiten des Plattenmagazins 3 vor, daß er von einem Greifarm einer Auszugeinrichtung der Transporteinrichtung 4 erfaßt werden kann. Jedes Plattenmagazin 3 ist auswechselbar von der Vorderseite des Gehäuses 2 her schubfachartig in das Gehäuse 2 eingesetzt. Das Gehäuse 2 besteht aus einer rechteckförmigen Bodenplatte 9 und einer dazu im bestimmten Abstand liegenden, rechteckförmigen Deckenplatte 10, die durch an den Ecken angeordnete, als Stangen ausgebildete Verbindungselemente 11 miteinander verbunden sind. Die Deckenplatte 10 ist abnehmbar und die Verbindungselemente 11 sind in ihrer Länge austauschbar, so daß verschieden hohe Plattenmagazine 3 zum Einsatz kommen können. Auf der Innenseite der Bodenplatte 9 und auf der Innenseite der Deckenplatte 10 sind gegenüberliegend Führungsschienen 12 für jedes Plattenmagazin 3 angeordnet, die mit einer entsprechenden Nut in der Bodenwand bzw. in der Deckenwand des Plattenmagazins 3 korrespondieren.

Die rechteckförmige, allseits geschlossene Kassette 7, die dem Schutz der innenliegenden, freibeweglichen Platte 1 dient, ist an ihrer Unterseite mittig mit einer Zugriffsöffnung 13 versehen, durch die die Platte 1 von dem Plattenteller der Abspieleinheit 38 in Drehung versetzt werden kann. Neben der Zugriffsöffnung 13 befindet sich in der Unterseite der Kassette 7 ein Fenster 14, durch das die Platte 1 von dem Abspielkopf der Abspieleinheit 38 abgetastet werden kann, während sie in der Kassette 7 gedreht wird. Dem Fenster 14 ist ein in die Kassette 7 integriertes Schiebeelement 15 zugeordnet, durch das das Fenster 14 geöffnet und geschlossen werden kann. Das Schiebeelement weist eine in einen seitlichen Schlitz 16 der Kassette 7 eingreifende Abwinklung 24 auf, die in der Zu-Stellung des Schiebeelementes 15 mit einer nicht näher dargestellten Verriegelungseinrichtung 17 zusammenwirkt, welche einen federbelasteten, in den Schlitz 16 der Kassette 7 eintauchenden Hebel 18 aufweist. Zum Öffnen des Fensters 14 ist also zunächst die Verriegelungseinrichtung 17 zu lösen und erst dann kann das Schiebeelement in seine Auf-Stellung bewegt werden. Dem Schlitz 16 in der einen Seitenwand der Kassette 7 liegt in der anderen Seitenwand ein weiterer Schlitz 19 gegenüber.

Der Kassettenhalter 6 umfaßt einen die Kassette 7 aufnehmenden Rahmen 20, an dessen dem Fenster 14 der Kassette 7 zugewandten Seitenwand 21 eine in den Schlitz 16 der Kassette 7 eingreifende Nase 22 in einer Position angeformt ist, in der sie beim Einschieben der Kassette 7 in den Kassettenhalter 6 von der Vorderseite 23 des Kassettenhalters 6 her zunächst die Verriegelungseinrichtung 17 für das Schiebeelement 15 löst und dann durch Anlage an der Abwinklung 24 des Schiebeelementes 15 dieses in die Auf-Stellung bewegt. In der Auf-Stellung des Schiebeelementes 15 rastet ein an der Seitenwand 21 des Rahmens 20 angebrachter elastischer Vorsprung 25 in eine zugehörige Öffnung 26 der Abwinklung 24 des Schiebeelementes 15 ein und hält damit das Schiebeelement 15 in seiner Auf-Stellung fest. Beim Herausschieben der Kassette 7 aus dem Kassettenhalter 6 in Richtung der Vorderseite 23 des Kassettenhalters 6 wird das Schiebeelement 15 durch den Vorsprung 25 in die Zu-Stellung transportiert, in der es durch die Verriegelungseinrichtung 17 festgelegt ist, und anschließend gleitet der Vorsprung 25 aus der Öffnung 26 heraus. Der Vorsprung 25 ist an einer aus der Seitenwand 21 des Rahmens 20 ausgeklinkten, federnden Zunge 27 angeformt.

Der Nase 22 der Seitenwand 21 des Rahmens 20 ist ein an der Seitenwand 21 angeformter Haltesteg 28 vorgelagert, der in den Schlitz 16 der Kassette 7 eingreift. An der der Seitenwand 21 gegenüberliegenden Seitenwand 29 des Rahmens 20 sind zwei zueinander beabstandete weitere Haltestege 28 angeformt, die in den Schlitz 19 der Kassette 7 eingreifen. An der Vorderseite 23 und an der Rückseite 30 des Rahmens 20 befindet sich jeweils eine Gleitschiene 31, die zur Auflage im Aufnahmefach 8 der Plattenmagazine 3 und zur Auflage im Tragarm 5 der Transporteinrichtung 4 dienen. An die in Einschubrichtung der Kassette 7 in dem Kassettenhalter 6 vordere Gleitschiene 31 schließt sich endseitig jeweils eine Greiftasche 32 an, in die ein Greifarm einer Auszugeinrichtung der Transporteinrichtung 4 zur Beförderung des Kassettenhalters 6 eingreifen kann. Im eingeschobenen Zustand der Kassette 7 in den Kassettenhalter 6 übergreift die vordere Gleitschiene 31 in einer bestimmten Höhe die der Gleitschiene 31 zugewandte Außenwand der Kassette 7. Die in Einschubrichtung der Kassette 7 in dem Kassettenhalter 6 hintere Gleitschiene 31 ist mittig mit einer Rastmulde 33 versehen. In die Rastmulde 33 greift in der Endposition des Kassettenhalters 6 im Plattenmagazin 3 eine entsprechend am Plattenmagazin festgelegte Rastfeder ein. Ebenso greift in der Endposition des Kassettenhalters 6 in dem Tragarm 5 der Transporteinrichtung 4 eine an dem Tragarm 5 festgelegte Rastfeder in die Rastmulde 33 ein. Der Rahmen 20 des KasSettenhalters 6 ist mit einer Deckenwand 34 versehen, in die eine Aussparung 35 entsprechend der Größe eines auf der Oberseite der Kassette 7 angebrachten Informations-Bildes 36 eingelassen ist. Des weiteren befindet sich auf der Oberseite der Kassette 7 ein Pfeil 37, der die Einschubrichtung der Kassette 7 in den Kassettenhalter 6 andeutet. Das Informatiojns-Bild 36 der Kassette 7 kann also beim Abspielen der in der Kassette 7 enthaltenen Platte 1 in der richtigen Lage betrachtet werden.

## Patentansprüche

1. Plattenabspielgerät mit mindestens einem Plattenmagazin (3), das eine Vielzahl übereinanderliegend in Aufnahmefächern (8) abgelegter Platten (1) aufweist, und mit einer in Stapelrichtung des Plattenmagazins (3) verfahrbaren Transporteinrichtung (4) zum Austausch einer gewünschten Platte (1) zwischen dem Aufnahmefach (8) und einer Abspieleinheit (38), wobei jede Platte (1) drehbeweglich in einer Kassette (7) mit mindestens einem dem Abspielkopf der Abspieleinheit (38) zugeordneten, durch ein Schiebeelement (15) verschließbaren Fenster (14) untergebracht ist,
dadurch gekennzeichnet, daß
- jede Kassette (7) in einen Kassettenhalter (6) eingeschoben ist, der im Aufnahmefach des Plattenmagazins (3) gelagert und von der Transporteinrichtung (4) ergreifbar ist und,
- jeder Kassettenhalter (6) zum einen mit einer Nase (22), die beim Einschieben der Kassette (7) in den Kassettenhalter (6) das Schiebeelement (15) in die Auf-Stellung überführt, und zum anderen mit einem elastischen Vorsprung (25), der beim Herausziehen der Kassette (7) aus dem Kassenhalter (6) das Schiebeelement (15) in die Zu-Stellung überführt, versehen ist.

2. Plattenabspielgerät nach Anspruch 1, dadurch gekennzeichnet, daß das Schiebeelement (15) der Kassette (7) in der Zu-Stellung durch eine federbelastete Verriegelungseinrichtung (17) festgelegt ist, und daß die Nase (22) des Kassettenhalters (6) beim Einschieben der Kassette (7) in den Kassettenhalter (6) zuerst die Verriegelungseinrichtung (17) löst.

3. Plattenabspielgerät nach den Ansprüchen 1 oder 2, dadurch gekennzeichnet, daß der einen Rahmen (20) umfassende Kassettenhalter (6) in Einschubrichtung der Kassette (7) im hinteren Bereich mindestens zwei gegenüberliegende Haltestege (28) aufweist, die in entsprechende seitliche Schlitze (16 bzw. 19) der Kassette (7) eingreifen.

4. Plattenabspielgerät nach den Ansprüchen 1 bis 3, dadurch gekennzeichnet, daß die Nase (22) an der Innenseite der dem Fenster (14) der Kassette (7) zugewandten Seitenwand (21) des Rahmens (20) angeformt ist, und beim Einschieben der Kassette (7) in den Kassettenhalter (6) in den entsprechenden seitlichen Schitz (16) der Kassette (7) eingreift, einen in diesen Schlitz (16) vorstehenden federbelasteten Hebel (18) der Verriegelungseinrichtung (17) niederdrückt und an einer den Schlitz (16) teilweise abdeckenden Abwinklung (24) des sich in der Zu-Stellung befindlichen Schiebeelementes (15) zur Anlage kommt.

5. Plattenabspielgerät nach einem der Ansprüche 1 bis 4, dadurch gekennzeichnet, daß der an der Innenseite der dem Fenster (14) der Kassette (7) zugewandten Seitenwand (21) des Rahmens (20) angebrachte elastische Vorsprung (25) im eingeschobenen Zustand der Kassette (7) in den Kassettenhalter (6) in eine zugehörige Öffnung (26) der Abwinklung (24) des Schiebeelementes (15) eingreift.

6. Plattenabspielgerät nach einem der Ansprüche 1 bis 5 dadurch gekennzeichnet, daß der Vorsprung (25) an einer aus der Seitenwand (21) des Rahmens (20) ausgeklinkten, federnden Zunge (27) angeformt ist.

7. Plattenabspielgerät nach einem der Ansprüche 1 bis 5, dadurch gekennzeichnet, daß der Vorsprung (25) als federbelasteter, in die Seitenwand (21) des Rahmens (20) eingesetzter Raststift ausgebildet ist.

8. Plattenabspielgerät nach einem der Ansprüche 1 bis 7, dadurch gekennzeichnet, daß der Rahmen (20) des Kassettenhalters (6) mit einer Deckenwand (34) versehen ist, in die eine Aussparung (35) entsprechend der Größe eines auf der Oberseite der Kassette (7) angebrachten Informations-Bildes (36) eingelassen ist, das beim Abspielen der in der Kassette (7) befindlichen Platte (1) in der richtigen Lage zu betrachten ist.

9. Plattenabspielgerät nach einem der Ansprüche 1 bis 8, dadurch gekennzeichnet, daß der Rahmen (20) des Kassettenhalters (6) außenseitig quer zur Einschubrichtung der Kassette (1) zwei gegenüberliegende Gleitschienen (31) zur Auflage im Aufnahmefach (8) des Plattenmagazins (3) und im Tragarm (5) der Transporteinrichtung (4) aufweist.

10. Plattenabspielgerät nach einem der Ansprüche 1 bis 9, dadurch gekennzeichnet, daß sich an die in Einschubrichtung der Kassette (7) in dem Kassettenhalter (6) vordere Gleitschiene (31) des Rahmens (20) endseitig jeweils eine Greiftasche (32) für einen Greifarm der Transporteinrichtung (4) anschließt.

11. Plattenabspielgerät nach einem der Ansprüche 1 bis 10, dadurch gekennzeichnet, daß die vordere Gleitschiene (31) im eingeschobenen Zustand der Kassette (7) in dem Kassettenhalter (6) die der Gleitschiene (31) zugewandte Außenwand der Kassette (7) in einer bestimmten Höhe übergreift.

12. Plattenabspielgerät nach einem der Ansprüche 1 bis 11, dadurch gekennzeichnet, daß in die in Einschubrichtung der Kassette (7) in dem Kassettenhalter (6) hintere Gleitschiene (31) des Rahmens (20) mittig eine Rastmulde (33) eingelassen ist, in die eine Rastfeder des Plattenmagazins (3) oder eine Rastfeder des Tragarmes (5) der Transporteinrichtung (4) eingreift.

## Claims

1. Disc player, having at least one disc magazine (3), which has a plurality of discs (1) deposited one above the other in accommodation compartments (8), and having a conveying arrangement (4), which is displaceable in the stacking direction of the disc magazine (3), for exchanging a desired disc (1) between the accommodation compartment (8) and a playing unit (38), each disc (1) being rotatably accommodated in a cassette (7) having at least one window (14), which is associated with the playing head of the playing unit (38) and is closable by means of a sliding element (15),
characterised in that
- each cassette (7) is inserted into a cassette holder (6), which is mounted in the accommodation compartment of the disc magazine (3) and can be grasped by the conveying arrangement (4), and
- each cassette holder (6) is provided, on the one hand, with a projection (22), which converts the sliding element (15) into the open position when the cassette (7) is inserted into the cassette holder (6), and, on the other hand, with a resilient projection member (25), which converts the sliding element (15) into the closed position when the cassette (7) is withdrawn from the cassette holder (6).

2. Disc player according to claim 1, characterised in that the sliding element (15) of the cassette (7) is secured in the closed position by a spring-loaded lockling arrangement (17), and in that the projection (22) of the cassette holder (6) initially releases the locking arrangement (17) when the cassette (7) is inserted into the cassette holder (6).

3. Disc player according to claims 1 or 2, characterised in that the cassette holder (6), which includes a frame (20), has at least two oppositely situated retaining webs (28) in the rear region, when viewed with respect to the insert direction of the cassette (7), and said webs engage in corresponding lateral slots (16 or 19 respectively) in the cassette (7).

4. Disc player according to claims 1 to 3, characterised in that the projection (22) is shaped to fit on the inner surface of the lateral wall (21) of the frame (20) facing the window (14) of the cassette (7) and engages in the corresponding lateral slot (16) in the cassette (7) when the cassette (7) is inserted into the cassette holder (6), said projection presses-down a spring-loaded lever (18) of the locking arrangement (17), which lever protrudes into this slot (16), and comes to abut against an angled portion (24) of the sliding element (15), which is in the closed position, said angled portion partially covering the slot (16).

5. Disc player according to one of claims 1 to 4, characterised in that the resilient projection member (25), which is attached to the inside of the lateral wall (21) of the frame (20) facing the window (14) of the cassette (7), engages in an associated aperture (26) in the angled portion (24) of the sliding element (15) when the cassette (7) has been inserted into the cassette holder (6).

6. Disc player according to one of claims 1 to 5, characterised in that the projection member (25) is shaped to fit on a resilient tongue (27), which has been disengaged from the lateral wall (21) of the frame (20).

7. Disc player according to one of claims 1 to 5, characterised in that the projection member (25) is configured as a spring-loaded locking pin, which is inserted into the lateral wall (21) of the frame (20).

8. Disc player according to one of claims 1 to 7, characterised in that the frame (20) of the cassette holder (6) is provided with a cover wall (34), in which a recess (35) is provided, corresponding to the size of an information display (36), which is mounted on the upper side of the cassette (7) and is to be viewed in the correct position when the disc (1) in the cassette (7) is being played.

9. Disc player according to one of claims 1 to 8, characterised in that the frame (20) of the cassette holder (6) is provided externally, transversely relative to the insert direction of the cassette (1), with two oppositely situated slide rails (31) for support in the accommodation compartment (8) of the disc magazine (3) and in the supporting arm (5) of the conveying arrangement (4).

10. Disc player according to one of claims 1 to 9, characterised in that a grip cavity (32) for a gripping arm of the conveying arrangement (4) communicates terminally with the respective front slide rail (31) of the frame (20), when viewed with respect to the insert direction of the cassette (7) in the cassette holder (6).

11. Disc player according to one of claims 1 to 10, characterised in that the front slide rail (31) overlaps the external wall of the cassette (7), facing the slide rail (31), in a predetermined height when the casette (7) has been inserted in the cassette holder (6).

12. Disc player according to one of claims 1 to 11, characterised in that a locking depression (33) is provided centrally in the rear slide rail (31) of the frame (20), when viewed with respect to the insert direction of the cassette (7) in the cassette holder (6), a locking spring of the disc magazine (3) or a locking spring of the supporting arm (5) of the conveying arrangement (4) engaging in said depression.

## Revendications

1. Tourne-disque avec au moins un magasin à disques (3), qui comporte une pluralité de disques (1), rangés superposés dans des casiers de réception (8), et avec un dispositif de transport (4) déplaçable suivant le sens d'empilement du magasin à disques (3), pour l'échange d'un disque souhaité (1) entre le casier de réception (8) et une unité de lecture (38), chaque disque (1) étant logé mobile en rotation dans une cassette (7) avec au moins une fenêtre (14) pouvant être fermée par un élément coulissant (5), associée à la tête de lecture de l'unité de lecture (38),
caractérisé en ce que
- chaque cassette (7) est introduite dans un support de cassette (6), qui est monté dans le casier de réception du magasin à disques (3) et peut être saisi par le dispositif de transport (4) et
- chaque support de cassette (6) est pourvu d'une part d'un ergot (22), qui, lors de l'introduction de la cassette (7) dans le support de cassette (6), fait passer l'élément coulissant (15) dans la position ouverte, et d'autre part d'une saillie élastique (25), qui lors de l'extraction de la cassette (7) hors du support de cassette (6), fait passer l'élément coulissant (15) dans la position fermée.

2. Tourne-disque selon la revendication 1, caractérisé en ce que l'élément coulissant (15) de la cassette (7) est fixé dans la position fermée par un dispositif de verrouillage (17) soumis à l'action d'un ressort, et en ce que l'ergot (22) du support de cassette (6) libère d'abord le dispositif de verrouillage (17), lors de l'introduction de la cassette (7) dans le support de cassette (6).

3. Tourne-disque selon les revendications 1 ou 2, caractérisé en ce que le support de cassette (6), comprenant un cadre (20) présente, suivant le sens d'introduction de la cassette (7), dans la zone arrière, au moins deux tenons de maintien (28) situés à l'opposé, qui s'engagent dans des fentes latérales correspondantes (16 ou 19) de la cassette (7).

4. Tourne-disque selon les revendications 1 à 3, caractérisé en ce que l'ergot (22) est formé sur le côté intérieur de la paroi latérale (21), tournée vers la fenêtre (14) de la cassette (7), du cadre (20) et s'engage dans la fente latérale (16) correspondante de la cassette (7), lors de l'introduction de la cassette (7) dans le support de cassette (6), presse vers le bas un levier (18) soumis à l'action d'un ressort, faisant saillie dans cette fente (16), du dispositif de verrouillage (17) et vient en application contre un coude (24), recouvrant partiellement la fente (16), de l'élément coulissant (15) se trouvant dans la position fermée.

5. Tourne-disque selon l'une des revendications 1 à 4, caractérisé en ce que la saillie élastique (25), placée sur le côté intérieur de la paroi latérale (21), tournée vers la fenêtre (14) de la cassette (7), du cadre (20) s'engage, à l'état introduit de la cassette (7) dans le support de cassette (6), dans une ouverture (26) correspondante du coude (24) de l'élément coulissant (15).

6. Tourne-disque selon l'une des revendications 1 à 5, caractérisé en ce que la saillie (25) est formée sur une languette (27) élastique, découpée dans la paroi latérale (21) du cadre (20).

7. Tourne-disque selon l'une des revendications 1 à 5, caractérisé en ce que la saillie (25) se présente sous la forme d'une tige d'encliquetage soumise à l'action d'un ressort, insérée dans la paroi latérale (21) du cadre (20).

8. Tourne-disque selon l'une des revendications 1 à 7, caractérisé en ce que le cadre (20) du support de cassette (6) est pourvu d'une paroi de couverture (34), dans laquelle est encastrée une découpe (35) correspondant à la grandeur d'une image d'information (36), placée sur la face supérieure de la cassette (7), qui doit être observée dans la position correcte, lors de la lecture du disque (1) se trouvant dans la cassette (7).

9. Tourne-disque selon l'une des revendications 1 à 8, caractérisé en ce que le cadre (20) du support de cassette (6) présente, sur le côté extérieur, transversalement au sens d'introduction de la cassette (1), deux glissières (31) situées à l'opposé pour être supportées dans le casier de réception (8) du magasin à disques (3) et dans le bras de support (5) du dispositif de transport (4).

10. Tourne-disque selon l'une des revendications 1 à 9, caractérisé en ce que la glissière (31) du cadre (20), se trouvant à l'avant suivant le sens d'introduction de la cassette (7) dans le support de cassette (6), se rattache côté extrémité à une poche de préhension (32) pour un bras de préhension du dispositif de transport (4).

11. Tourne-disque selon l'une des revendications 1 à 10, caractérisé en ce que la glissière avant (31), à l'état introduit de la cassette (7) dans le support de cassette (6), passe sur la paroi extérieure, tournée vers la glissière (31), de la cassette (7) à une hauteur déterminée.

12. Tourne-disque selon l'une des revendications 1 à 11, caractérisé en ce que dans la glissière (31) du cadre (20) située à l'arrière suivant le sens d'introduction de la cassette (7) dans le support de cassette (6) est ménagée au milieu une encoche d'encliquetage (33), dans laquelle s'engage un ressort d'encliquetage du magasin à disques (3) ou un ressort d'encliquetage du bras de support (5) du dispositif de transport (4).
